# EUROPEAN PATENT APPLICATION

(11) **EP 4 177 763 A1**
(43) Date of publication of application: **10.05.2023**
(21) Application number: 21846481.6
(22) Date of filing: 22.07.2021
(51) Int. Cl.: G06F 13/28

(54) **DATA ACCESS METHOD AND RELATED DEVICE**

(30) Priority: 24.07.2020 CN 202010728735
(71) Applicant: Huawei Technologies Co., Ltd., Longgang District, Shenzhen, Guangdong 518129 (CN)
(72) Inventor: HE, Xianjun, Shenzhen, Guangdong 518129 (CN); YU, Bowei, Shenzhen, Guangdong 518129 (CN)
(74) Representative: Grünecker Patent- und Rechtsanwälte PartG mbB
(86) International application number: PCT/CN2021/107932
(87) International publication number: WO 2022/017475

(57) **Abstract**

This application provides a data access method and a related device. The method includes: A network device writes to-be-written data received from a host into memory of a storage device, where the host is connected to the storage device by using the network device. The network device indicates a solid-state drive SSD into which the to-be-written data in the storage device is to be written to write the to-be-written data in the memory into the SSD. According to the foregoing method, the data can be directly stored in the memory of the storage device, and the SSD migrates the data from the memory to the SSD for persistent storage without participation of a CPU of the storage device. This reduces CPU occupation of the storage device.

## Description

### TECHNICAL FIELD

The present invention relates to the field of storage technologies, and in particular, to a data access method and a related device.

### BACKGROUND

With rapid development of computer information technologies such as big data, cloud computing, and artificial intelligence in recent years, a scale of global Internet data exponentially increases. A high-performance memory emerges due to a requirement of many high-concurrency and low-delay applications for high-performance hardware. Because the high-performance memory has a powerful I/O throughput capability, a distributed file system needs to allocate a relatively large quantity of computing resources to complete data processing and data exchange. As a result, a transmission delay of the system increases, and a network transmission capability and system performance are limited. To resolve this problem, remote direct memory access (remote direct memory access, RDMA) comes into being. RDMA is a technology for directly performing remote memory access, to be specific, data may be quickly migrated from one system to another remote system memory without any impact on an operating system. This reduces consumption of a central processing unit (central processing unit, CPU) in a data transmission process, and frees up a memory bandwidth, thereby improving performance of a system in service processing. RDMA has characteristics of a high bandwidth, a low delay, and low CPU usage.

Currently, when data is read and written through RDMA, a network device of a host first writes the data into memory of a storage device through an RDMA operation, and a CPU in the storage device needs to store the data in the memory into a persistent storage medium, such as an SSD. However, a CPU resource needs to be consumed for storing the data in the memory into the persistent storage medium by using the CPU. This affects communication between the host and the storage device.

Therefore, how to implement that the network device of the host directly stores the data into the persistent storage medium to reduce CPU usage of the storage device is an urgent problem to be currently resolved.

### SUMMARY

Embodiments of the present invention disclose a data access method and a related device, to directly and persistently store data to reduce CPU usage of a storage device.

According to a first aspect, this application provides a data access method, including: A network device writes to-be-written data received from a host into memory of a storage device, where the host is connected to the storage device by using the network device. The network device indicates an SSD into which the to-be-written data in the storage device is to be written to write the to-be-written data in the memory into the SSD.

Optionally, the network device may be a network interface controller RNIC that supports remote direct memory access, a field programmable gate array FPGA, an application-specific integrated circuit (application specific integrated circuit, ASIC) chip, or the like.

In the solution provided in this application, after writing the data into the memory of the storage device, the network device directly indicates the SSD to write the data in the memory of the storage device into the SSD for persistent storage without participation of a CPU of the storage device, thereby reducing CPU usage of the storage device.

With reference to the first aspect, in a possible implementation of the first aspect, the network device stores information about the to-be-written data into the SSD, and indicates the SSD to obtain the to-be-written data from the memory based on the information about the to-be-written data, and write the to-be-written data into the SSD.

Optionally, the information about the to-be-written data may include a start address and a data length of the to-be-written data in the memory of the storage device.

In the solution provided in this application, the network device directly stores the information about the to-be-written data into the SSD, so that the SSD persistently stores the to-be-written data based on the information about the to-be-written data. This can avoid participation of the CPU of the storage device, thereby reducing CPU usage of the storage device.

With reference to the first aspect, in a possible implementation of the first aspect, the network device receives an address, in the SSD, that is sent by the storage device and that is used to store the information about the to-be-written data. The network device stores the information about the to-be-written data into the address that is in the SSD and that is used to store the information about the to-be-written data.

In the solution provided in this application, the network device obtains, in advance, the address that is in the SSD and that is used to store the information about the to-be-written data, to ensure that the information about the to-be-written data can be accurately stored into the SSD, thereby avoiding participation of the CPU of the storage device.

With reference to the first aspect, in a possible implementation of the first aspect, the address of the information about the to-be-written data is an address of a submission queue SQ of the SSD.

With reference to the first aspect, in a possible implementation of the first aspect, the network device receives an address, in the SSD, that is sent by the storage device and that is used to store information about to-be-read data. The network device stores, into the address that is in the SSD and that is used to store the information about the to-be-read data, the information that is about the to-be-read data and that is sent by the host, and indicates the SSD to obtain the to-be-read data from the SSD based on the information about the to-be-read data, and write the to-be-read data into the memory of the storage device.

In the solution provided in this application, the network device obtains, in advance, the address that is in the SSD and that is used to store the information about the to-be-read data, and then stores the information about the to-be-read data into the address, to indicate the SSD to write the to-be-read data into the memory of the storage device based on the information about the to-be-read data. This ensures that the CPU of the storage device is bypassed, and a process of reading data is directly completed, thereby reducing CPU usage of the storage device.

With reference to the first aspect, in a possible implementation of the first aspect, the address that is in the SSD and that is used to store the information about the to-be-read data is an address of a doorbell.

With reference to the first aspect, in a possible implementation of the first aspect, after the SSD writes the to-be-written data in the memory of the storage device into the SSD, the network device receives a data writing complete notification message returned by the SSD.

In the solution provided in this application, after receiving the data writing complete notification message returned by the SSD, the network device may determine that the data is successfully written into the SSD and persistently stored, and no data writing operation needs to be repeatedly performed to ensure integrity of a data writing process.

According to a second aspect, this application provides a network device, including: a receiving unit, configured to receive to-be-written data from a host; a writing unit, configured to write the to-be-written data into memory of a storage device; and an indication unit, configured to indicate a solid-state drive SSD into which the to-be-written data in the storage device is to be written to write the to-be-written data in the memory into the SSD.

With reference to the second aspect, in a possible implementation of the second aspect, the indication unit is specifically configured to: store information about the to-be-written data into the SSD, and indicate the SSD to obtain the to-be-written data from the memory based on the information about the to-be-written data, and write the to-be-written data into the SSD.

With reference to the second aspect, in a possible implementation of the second aspect, the receiving unit is further configured to receive an address, in the SSD, that is sent by the storage device and that is used to store the information about the to-be-written data. The indication unit is further configured to store the information about the to-be-written data into the address that is in the SSD and that is used to store the information about the to-be-written data.

With reference to the second aspect, in a possible implementation of the second aspect, the address of the information about the to-be-written data is an address of a submission queue SQ of the SSD.

With reference to the second aspect, in a possible implementation of the second aspect, the receiving unit is further configured to receive an address, in the SSD, that is sent by the storage device and that is used to store information about to-be-read data. The indication unit is further configured to store the information about the to-be-read data into the address that is in the SSD and that is used to store the information about the to-be-read data, and indicate the SSD to obtain the to-be-read data from the SSD based on the information about the to-be-read data, and write the to-be-read data into the memory of the storage device.

With reference to the second aspect, in a possible implementation of the second aspect, the address that is in the SSD and that is used to store the information about the to-be-read data is an address of a doorbell.

With reference to the second aspect, in a possible implementation of the second aspect, the receiving unit is further configured to receive a data writing complete notification message returned by the SSD.

According to a third aspect, this application provides a computing device, where the computing device includes a processor and a memory. The processor is connected to the memory by using an internal bus. The memory stores instructions, and the processor invokes the instructions in the memory to perform the data access method that is in the first aspect and that is provided with reference to any implementation of the first aspect.

According to a fourth aspect, this application provides a computer storage medium, where the computer storage medium stores a computer program. When the computer program is performed by a processor, a procedure of the data access method that is in the first aspect and that is provided with reference to any implementation of the first aspect may be implemented.

According to a fifth aspect, this application provides a computer program product, where the computer program includes instructions. When the computer program is performed by a computer, the computer is enabled to perform a procedure of the data access method that is in the first aspect and that is provided with reference to any implementation of the first aspect.

### BRIEF DESCRIPTION OF DRAWINGS

To describe the technical solutions in embodiments of the present invention more clearly, the following briefly describes the accompanying drawings for describing embodiments. It is clear that the accompanying drawings in the following description show some embodiments of the present invention, and a person of ordinary skill in the art may still derive other drawings from these accompanying drawings without creative efforts.
FIG. 1 is a schematic diagram in which data is written into a solid-state drive according to an embodiment of this application;
FIG. 2 is a schematic diagram of a system architecture according to an embodiment of this application;
FIG. 3 is a schematic flowchart of a connection establishment method according to an embodiment of this application;
FIG. 4 is a schematic flowchart of a data writing method according to an embodiment of this application;
FIG. 5 is a schematic flowchart of a data reading method according to an embodiment of this application;
FIG. 6 is a schematic diagram of a structure of a network device according to an embodiment of this application; and
FIG. 7 is a schematic diagram of a structure of a computing device according to an embodiment of this application.

### DESCRIPTION OF EMBODIMENTS

The technical solutions in embodiments of this application are clearly and completely described below with reference to the accompanying drawings. It is clear that the described embodiments are merely some rather than all of embodiments of this application.

First, some terms and related technologies in this application are explained with reference to the accompanying drawings, to facilitate understanding by a person skilled in the art.

A host may also be referred to as a client, which may specifically include a physical machine, a virtual machine, a container, and the like, and is configured to generate or consume data. The host may be, for example, an application server, a distributed file system server, or the like.

A network device of the host is a device of the host for data communication, and may specifically include a network interface controller (network interface controller, NIC), an RNIC, and the like.

A storage device may also be referred to as a server, and may specifically include a device that can store data and that is in a form such as external centralized storage or distributed storage, for example, a storage server or a distributed database server.

A submission queue (submission queue, SQ) and a doorbell (doorbell) of a solid-state storage (SSD): In the storage device, a CPU of the storage device communicates with the SSD by using an NVMe protocol. In an initialization phase during start of the storage device, the CPU of the storage device establishes, in memory of the storage device, a submission queue (submission queue, SQ) and a completion queue (completion queue) for the SSD by using the NVMe protocol, and creates a doorbell in the SSD. The CPU stores a command sent to the SSD into the SQ, writes the command into the doorbell at a location of the SQ, obtains a command from the SQ by using the SSD and performs the command. After performing a command, the SSD stores information about the performed command into the completion queue. The CPU reads the information about the performed command in the completion queue, to determine the performed command, and deletes the performed command from a send queue.

An RDMA communications protocol is a protocol specification followed by a computing device configured to perform an RDMA operation. Currently, there are three communications protocols that support RDMA, which are respectively an InfiniBand (InfiniBand, IB) protocol, an Ethernet (RDMA over converged Ethernet, RoCE) protocol, and an Internet wide-area protocol (Internet wide area RDMA protocol, IWARP). All the three protocols may be used by using a same API. However, the three protocols have different physical layers and link layers. When the host device communicates with the storage device through RDMA, a send queue (send queue, SQ) is created in a network adapter of the host, and correspondingly, a receive queue (receive queue, RQ) corresponding to the send queue is created in a network adapter of the storage device. The send queue and the receive queue form a queue pair (queue pair, QP). An address of the queue is mapped to a virtual address of an application, and therefore the application may directly transmit data to the network adapter of the storage device by using the QP, so that the data may be stored into the memory of the storage device.

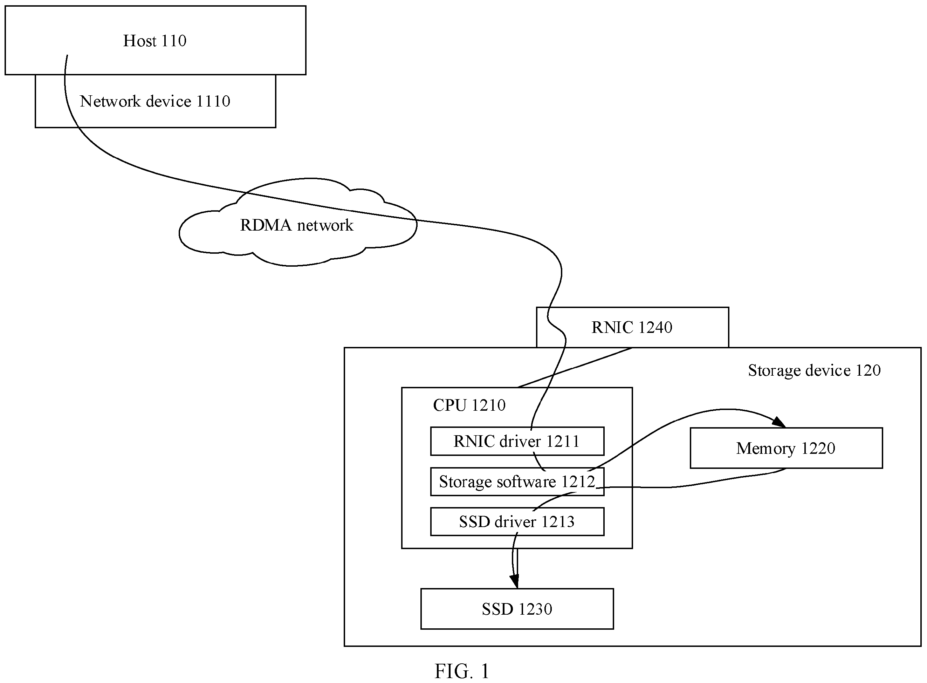

Currently, when transmitting data through RDMA, the host first transmits the data to the memory of the storage device, and then moves the data from the memory to the SSD by using the CPU of the storage device. FIG. 1 is a schematic diagram of a data writing scenario. A network device 1110 in a host 110 first writes data into a network device (that is, an RNIC 1240) of a storage device 120 through an RDMA operation, and then the RNIC 1240 writes the data into memory 1220 by using an RNIC driver 1211 in a CPU 1210. Storage software 1212 in the storage device 120 senses, through an event or interruption, that the data is written into the memory 1220. Then the CPU 1210 controls, by using an SSD driver 1213, an SSD 1230 to move the data from the memory 1220 to the SSD 1230 for persistent storage. After completing persistent storage of the data, the SSD 1230 notifies the storage software 1212 through interruption. Finally, the CPU 1210 returns a writing complete notification message to the host 110 by using the RNIC 1240.

When the data is persistently stored, participation of the CPU (including the RNIC driver, the storage software, and the SSD driver) is required to complete the entire storage process. This consumes a large quantity of CPU resources.

Based on the foregoing, this application provides a data access method. After data is stored into memory through RDMA, an SSD moves the data from the memory to the SSD for persistent storage without participation of a CPU of a storage device, thereby reducing CPU usage of the storage device.

The technical solutions in the embodiments of this application may be applied to any system that needs to remotely access a persistent storage medium, and in particular, to a scenario in which a bandwidth bottleneck exists, for example, an artificial intelligence (artificial intelligence, AI) training system, a video surveillance system, or a supercomputing system. For example, in the video surveillance system, a large amount of video data needs to be recorded, and data access and exchange need to be frequently performed. When a user accesses data by using the video surveillance system, the data access method provided in the embodiments of this application may be used in the video surveillance system, to resolve a bandwidth bottleneck that exists when data is read and written, and improve efficiency of reading and writing data.

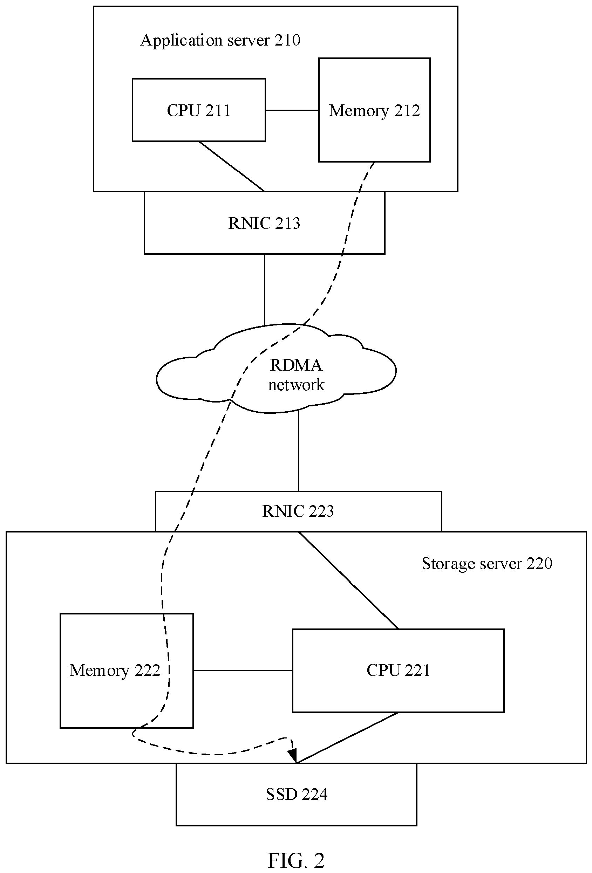

FIG. 2 is a schematic diagram of a system architecture according to an embodiment of this application. As shown in FIG. 2, a system 200 includes an application server 210 and a storage server 220. The application server 210 is connected to the storage server 220 by using an RDMA network. The application server 210 includes a CPU 211 and memory 212, and is connected to an RNIC 213. The storage server 220 includes a CPU 221 and memory 222, and is connected to an RNIC 223 and a persistent storage medium. Herein, an SSD 224 is used as an example for description. It should be understood that the persistent storage medium includes but is not limited to the SSD 224. The application server 210 registers, with the RNIC 213, the memory 212 required for data communication, and the storage server 220 registers, with the RNIC 223, the memory 222 required for data communication, so that the RNIC 213 and the RNIC 223 can operate the memory 222 and the memory 212 through RDMA. In addition, the storage server 220 maps a submission queue (submission queue, SQ) address and a doorbell (doorbell) address of the SSD 224, and registers, with the RNIC 223, virtual addresses obtained after mapping. The RNIC 223 sends the SQ address and the doorbell address to the RNIC 213 through an RDMA connection, so that the RNIC 213 can directly and remotely operate the SQ address and the doorbell address of the SSD 224. During data writing, the application server 210 generates data by using the CPU 211, stores the generated data into the memory 212, writes the data into the memory 222 of the storage server 220 by using the RNIC 213, and indicates, based on the SQ address and the doorbell address of the SSD 224, the SSD 224 to move the data in the memory 222 to the SSD 224 for persistent storage.

In this embodiment of this application, both the RNIC 213 and the RNIC 223 are common RNICs, and are not specially customized. The application server 210 and the storage server 220 include forms such as a physical machine, a virtual machine, and a container, and may be deployed on one or more computing devices (such as central servers) in a cloud environment or one or more computing devices (such as servers) in an edge environment.

It can be learned that, compared with a case in the data access system shown in FIG. 1, in the data access system shown in FIG. 2, after the application server writes the data into the memory of the storage server through an RDMA operation, the data is no longer processed by relying on the CPU and storage software in the storage server to be written into the SSD. Instead, an operating system of the storage server is bypassed to directly notify the SSD based on the SQ address and the doorbell address of the SSD, so that the SSD moves the data in the memory to the SSD for persistent storage. This can reduce CPU usage of the storage server.

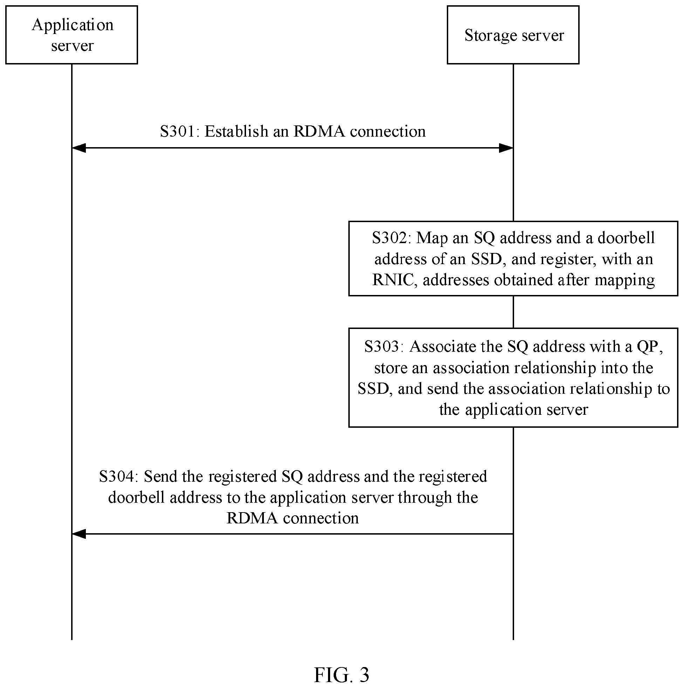

With reference to the schematic diagram of the system architecture shown in FIG. 2, a data access method provided in an embodiment of this application is described below with reference to FIG. 2. First, a connection establishment and memory registration process before data access is described. As shown in FIG. 3, the procedure includes the following steps.

S301: The application server 210 and the storage server 220 establish an RDMA connection.

Optionally, the application server 210 and the storage server 220 may establish the RDMA connection based on any of the following protocols: an IB protocol, an RoCE protocol, or an IWARP protocol.

Specifically, the application server 210 and the storage server 220 register an address of memory (which may be continuous virtual memory or continuous physical memory space) that needs to perform data communication, and the memory is used as a virtual continuous buffer to be provided for a network device. The buffer uses a virtual address. For ease of understanding and description, in this embodiment of this application, an example in which the network device is an RNIC is used for description, and no further distinction is made in subsequent description. For example, the application server 210 registers the memory 212 with the RNIC 213, and the storage server 220 registers the memory 222 with the RNIC 223. It should be understood that, during registration, operating systems of the application server 210 and the storage server 220 check permission of a registered block, and the registration process writes, into the RNIC, a table of mapping between a virtual address and a physical address of memory that needs to be registered. In addition, during memory registration, permission of a corresponding memory area is set, and the permission includes local writing, remote reading, remote writing, and the like. After registration, the memory registration process locks a memory page. To prevent the memory page from being replaced, the registration process needs to maintain mapping between physical memory and virtual memory.

Optionally, during memory registration, the application server 210 and the storage server 220 may register all of the memory of the application server 210 and the storage server 220, or randomly select a part of the memory for registration. During registration, a start address and a data length of the memory that needs to be registered are provided to the RNIC, so that the RNIC can determine the memory that needs to be registered.

It should be noted that, a remote identifier (key) and a local identifier are correspondingly generated in each time of memory registration. The remote identifier is used by a remote host to access local memory, and the local identifier is used by a local host to access the local memory. For example, during an operation of receiving data, the storage server 220 provides the application server 210 with the remote identifier generated in the memory registration, so that the application server 210 can remotely access the system memory 222 of the storage server 220 during an RDMA operation. In addition, a same memory buffer may be registered a plurality of times (even different operation permission is set), and different identifiers are generated in the plurality times of registration.

Further, the application server and the storage server negotiate with each other on creation of a QP when establishing the RDMA connection. When the QP is created, a send queue SQ and a receive queue RQ associated with each other are created. After the creation is completed, the application server 210 may communicate with the storage server 220 by using the QP.

It can be understood that after the application server 210 and the storage server 220 establish the RDMA connection, the application server 210 may remotely operate the memory 222 of the storage server 220 through RDMA.

S302: The storage server 220 maps an SQ address and a doorbell address of the SSD 224 and registers, with the RNIC 223, addresses obtained after mapping.

Specifically, in an initialization phase of the storage server 220, the storage server 220 establishes the SQ for the SSD 224 in the memory 222, and establishes a doorbell in the SSD 224, to implement communication between the CPU 221 in the storage server and the SSD 224. In this embodiment of the present invention, to implement communication between the SSD 224 and the network device, addresses of the SQ and the doorbell may be provided to the RNIC 223, and then are provided to the application server 210 by using the RNIC 223, so that the application server 210 can directly operate the SQ address and the doorbell address of the SSD. It should be noted that, the SQ address and the doorbell address are addresses of memory address space in a kernel mode, which cannot be directly registered with the RNIC 223, and can be registered only after the SQ address and the doorbell address are converted into virtual addresses in a user mode.

Further, the storage server 220 maps the SQ address and the doorbell address of the SSD into logically continuous virtual addresses in the user mode, and then provides the virtual addresses obtained through mapping to the RNIC 223 of the storage server for registration. A registration process of the virtual address is similar to the foregoing memory registration process. After the registration is completed, a remote identifier is also generated. The RNIC 223 sends the remote identifier to the application server 210, so that the application server 210 can directly and remotely operate the SQ address and the doorbell address of the SSD 224. Optionally, the storage server 220 may complete the mapping process through memory mapping (memory mapping, MMAP), to map the SQ address and the doorbell address into the virtual addresses in the user mode, to ensure normal communication between the application server 210 and the storage server 220.

S303: The storage server 220 associates the SQ address with the QP, stores an association relationship into the SSD 224, and sends the association relationship to the application server 210.

Specifically, a plurality of SQ addresses are allocated to the SSD 224 in an initialization phase. When establishing the RDMA connection, the RNIC 223 of the storage server 220 and the RNIC 213 of the application server 210 also create a plurality of QPs. Management software in the storage server 220 makes a one-to-one correspondence between the SQ addresses and the QPs, sends the correspondence to the application server 210, and stores the correspondence into the SSD 224. After receiving the correspondence, the application server 210 stores the correspondence.

It can be learned that after the storage server 220 associates the SQ addresses with the QPs, the SSD 224 may distinguish, based on the stored association relationship, the QPs corresponding to the SQ addresses, thereby distinguishing different clients or application servers.

S304: The storage server 220 sends the registered SQ address and the registered doorbell address to the application server 210 through the RDMA connection for storage.

Specifically, the RNIC 223 of the storage server 220 sends, to the RNIC 213 of the application server 210 through the established RDMA connection, the registered virtual SQ address, the registered virtual doorbell address, and the remote identifier generated during registration. After receiving the virtual SQ address, the virtual doorbell address, and the remote identifier, the RNIC 213 of the application server 210 may directly and remotely operate the SQ address and the doorbell address of the SSD 224 based on the remote identifier.

After receiving the virtual SQ address and the virtual doorbell address that are sent by the storage server 220, the application server 210 may process data through an RDMA operation, for example, reading data from the SSD 224 or writing data into the SSD 224.

It can be understood that through execution of the method procedure shown in FIG. 3, the application server 210 and the storage server 220 can successfully establish the RDMA connection and perform data transmission, and the application server 210 can remotely operate the memory 222 of the storage server 220 and the SQ address and the doorbell address of the SSD 224, thereby directly writing data into the SSD 224 or reading data from the SSD 224.

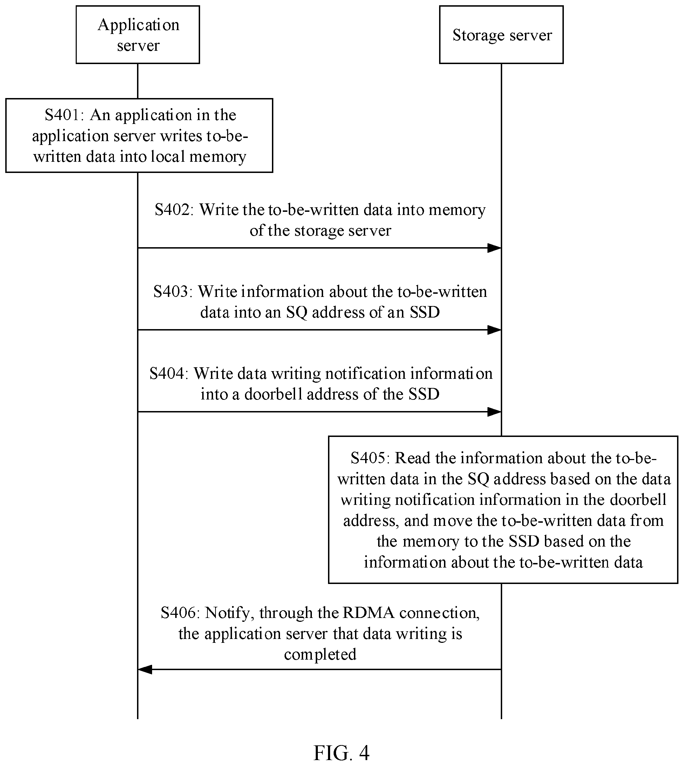

With reference to the system architecture shown in FIG. 2 and the connection establishment method procedure shown in FIG. 3, the following describes a data writing procedure in detail. As shown in FIG. 4, the procedure includes the following steps.

S401: An application in the application server 210 writes to-be-written data into local memory.

Specifically, the application in the application server 210 generates data that needs to be written into the SSD 224 of the storage server 220, and then first stores the data into the memory of the application server 210.

S402: The RNIC 213 of the application server 210 writes the to-be-written data into the memory 222 of the storage server 220.

Specifically, the application in the application server 210 sends an RDMA request to the RNIC 213 of the application server 210, where the request includes an address (for example, including a start address and a data length) of the to-be-written data in the memory 212. Then, the RNIC 213 extracts the to-be-written data from the memory 212 of the application server 210 based on the request, encapsulates, to a dedicated packet, an address (including a start address and a data length) of the to-be-written data in the storage server 220 and a remote identifier that is sent by the storage server 220 and that is used to operate memory corresponding to the address, and sends the dedicated packet to the RNIC 223 of the storage server 220 through the RDMA connection. After receiving the dedicated packet, the RNIC 223 of the storage server 220 determines, based on the remote identifier in the packet, whether the application server 210 has permission to operate the memory 222 of the storage server 220. After the determining, the RNIC 223 writes the to-be-written data into the memory corresponding to the address in the packet.

S403: The RNIC 213 of the application server 210 writes information about the to-be-written data into an SQ address of the SSD 224.

Specifically, the RNIC 213 of the application server 210 operates the SQ address of the SSD 224 by using a remote identifier corresponding to the stored SQ address, and writes the information about the to-be-written data into the SQ address of the SSD 224, where the information about the to-be-written data includes the start address and the data length of the to-be-written data in the storage server 210, and a data operation type (that is, a data writing operation).

S404: The RNIC 213 of the application server 210 writes data writing notification information into a doorbell address of the SSD 224.

Specifically, the RNIC 213 of the application server 210 operates the doorbell address of the SSD 224 by using a remote identifier corresponding to the stored doorbell address, and writes the data writing notification information into the doorbell address of the SSD 224. The data writing notification information includes the SQ address into which the information about the to-be-written data is written, and the data writing notification information is used to indicate the SSD 224 to read the information about the to-be-written data in the SQ address.

S405: The SSD 224 reads the information about the to-be-written data in the SQ address based on the data writing notification information in the doorbell address, and moves the to-be-written data from the memory 222 of the storage server 220 to the SSD 224 based on the information about the to-be-written data.

Specifically, after receiving the data writing notification information written into the doorbell address, the SSD 224 is woken up, then reads content of the SQ address included in the data writing notification information to determine that the operation is a data writing operation, and further finds the to-be-written data from the memory 222 of the storage server 220 based on an address in the information about the to-be-written data, and moves the to-be-written data to the SSD 224 to complete persistent storage.

It can be learned that moving the to-be-written data from the memory 222 of the storage server 220 to the SSD 224 does not require participation of any software and a CPU, and is directly completed by the SSD 224. This reduces CPU usage of the storage server 220 and effectively reduces costs.

S406: The SSD 224 notifies the RNIC 223 of the storage server 220 that data writing is completed, and the RNIC 223 of the storage server 220 notifies, through the RDMA connection, the application server 210 that data writing is completed.

Specifically, after completing data movement, the SSD 224 determines, based on the SQ address into which the data is written and the association relationship obtained and stored according to the foregoing step S303, a QP corresponding to the SQ address, and notifies, in a CQ corresponding to the QP, that data writing is completed. After parsing the CQ, the RNIC 223 of the storage server 220 determines that data writing is completed. Then, the RNIC 223 of the storage server 220 notifies, through a standard RDMA operation (for example, an RDMA send operation), the application server 210 that the data writing is completed, thereby completing the entire data writing procedure.

It can be learned that in the entire process of writing the to-be-written data into the SSD 224, participation of the software and CPU of the storage server 220 is not required, and the data writing procedure can be completed simply through cooperation between the SSD 224 and the memory 222 of the storage server 220. This reduces CPU usage of the storage server. In addition, a common RNIC can support this solution, thereby effectively extending an application scenario, and reducing application costs.

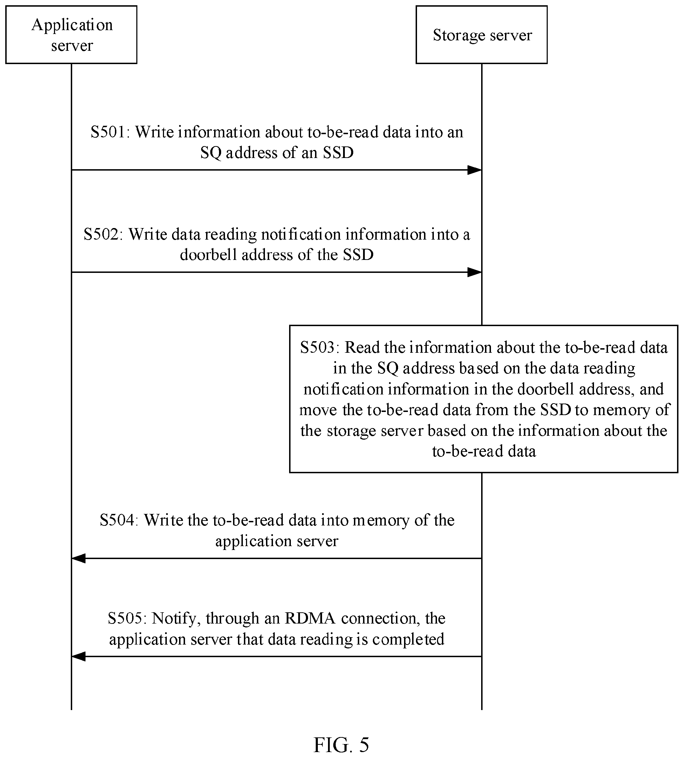

The method procedure in FIG. 4 describes in detail a process in which data from the application server is written into the SSD. Correspondingly, the application server may further read data from the SSD. The following describes in detail a data reading procedure. As shown in FIG. 5, the procedure includes the following steps.

S501: The RNIC 213 of the application server 210 writes information about to-be-read data into an SQ address of the SSD 224.

Specifically, an application in the application server 210 generates a data reading request, and then sends the data reading request to the RNIC 213 of the application server 210. The reading request includes an address (including a start address and a data length) of the to-be-read data in the SSD 224 and an address that is in the memory 222 of the storage server 220 and into which the data is to be stored after the data is read from the SSD 224.

Further, the RNIC 213 of the application server 210 operates the SQ address of the SSD 224 by using a remote identifier corresponding to the stored SQ address, and writes the information about the to-be-read data into the SQ address of the SSD 224. The information about the to-be-read data includes the start address and an address length of the to-be-read data in the SSD 224, an address that is in the memory 222 of the storage server 220 and into which the to-be-read data needs to be stored, and a data operation type (that is, a data reading operation).

S502: The RNIC 213 of the application server 210 writes data reading notification information into a doorbell address of the SSD 224.

Specifically, the RNIC 213 of the application server 210 operates the doorbell address of the SSD 224 by using a remote identifier corresponding to the stored doorbell address, and writes the data reading notification information into the doorbell address of the SSD 224. The data reading notification information includes the SQ address into which the information about the to-be-read data is written, and the data reading notification information is used to indicate the SSD 224 to read the information about the to-be-read data in the SQ address.

S503: The SSD 224 reads the information about the to-be-read data in the SQ address based on the data reading notification information in the doorbell address, and moves the to-be-read data from the SSD 224 to the memory 222 of the storage server 220 based on the information about the to-be-read data.

Specifically, after receiving the data reading notification information written into the doorbell address, the SSD 224 is woken up, then reads content of the SQ address included in the data reading notification information to determine that the operation is a data reading operation, and further extracts the data from the SSD 224 based on an address in the information about the to-be-read data, and moves the data to the memory 222 corresponding to the storage server 220.

S504: The RNIC 223 of the storage server 220 writes the to-be-read data into the memory 212 of the application server 210.

Specifically, the RNIC 223 of the storage server 220 encapsulates, to a dedicated packet, the to-be-read data, an address (including a start address and a data length) of the to-be-read data in the application server 210, and a remote identifier that is sent by the application server 210 and that is used to operate memory corresponding to the address, and sends the dedicated packet to the RNIC 213 of the application server 210 through the RDMA connection. After receiving the dedicated packet, the RNIC 213 of the application server 210 determines, based on the remote identifier in the packet, whether the storage server 220 has permission to operate the memory 212 of the application server 210. After the determining, the RNIC 213 writes the to-be-read data into the memory corresponding to the address in the packet.

S505: The SSD 224 notifies the RNIC 223 of the storage server 220 that data reading is completed, and the RNIC 223 of the storage server 220 notifies, through the RDMA connection, the application server 210 that data reading is completed.

Specifically, after completing data reading, the SSD 224 determines, based on the SQ address into which the data is written and the association relationship obtained and stored according to the foregoing step S303, a QP corresponding to the SQ address, notifies, in a CQ corresponding to the QP, that data reading is completed. After parsing the CQ, the RNIC 223 of the storage server 220 determines that data reading is completed. Then, the RNIC 223 of the storage server 220 notifies, through a standard RDMA operation (for example, an RDMA send operation), the application server 210 that data reading is completed, thereby completing the entire data reading procedure.

It can be learned that in the process of reading data from the SSD 224 to the memory 212 of the application server 210, participation of the software and CPU is also not required, and the data reading procedure can be completed by simply relying on cooperation between the SSD 224 and the memory 222 of the storage server 220. This reduces CPU usage of the storage server 220, effectively extends an applicable scenario, and reduces application costs.

It should be noted that the method embodiment shown in FIG. 5 and the method embodiment shown in FIG. 4 are based on a same idea, and may be mutually referenced in a specific implementation process. For brevity, details are not described herein.

The foregoing describes the method in the embodiments of this application in detail. To better implement the foregoing solutions in the embodiments of this application, correspondingly, the following further provides a related device configured to cooperate in implementing the foregoing solutions.

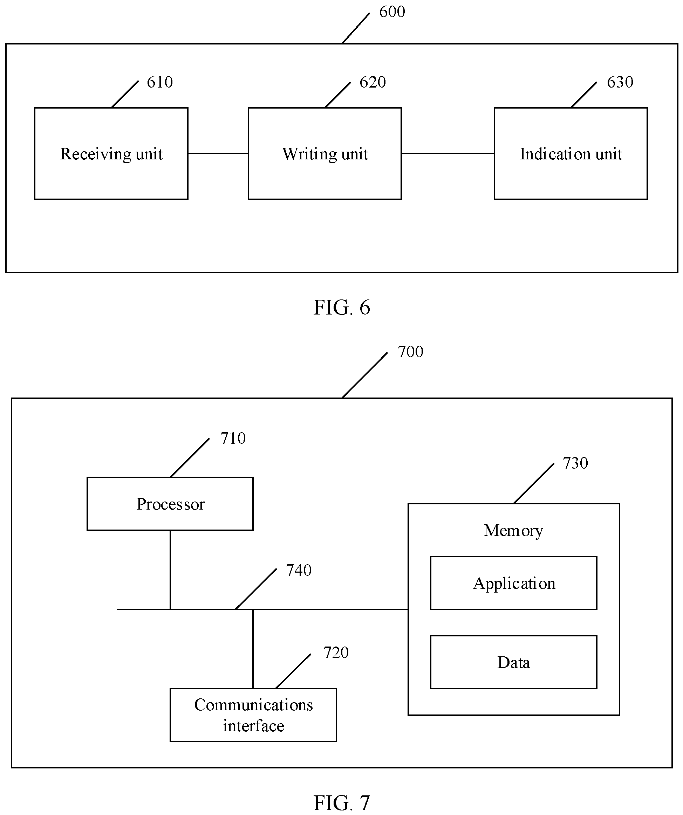

FIG. 6 is a schematic diagram of a structure of a network device according to an embodiment of this application. As shown in FIG. 6, the network device 600 includes a receiving unit 610, a writing unit 620, and an indication unit 630.

The receiving unit 610 is configured to receive to-be-written data from a host.

The writing unit 620 is configured to write the to-be-written data into memory of a storage device.

The indication unit 630 is configured to indicate a solid-state drive SSD into which the to-be-written data in the storage device is to be written to write the to-be-written data in the memory into the SSD.

In an embodiment, the indication unit is specifically configured to: store information about the to-be-written data into the SSD, and indicate the SSD to obtain the to-be-written data from the memory based on the information about the to-be-written data, and write the to-be-written data into the SSD.

In an embodiment, the receiving unit is further configured to receive an address, in the SSD, that is sent by the storage device and that is used to store the information about the to-be-written data. The indication unit is further configured to store the information about the to-be-written data into the address that is in the SSD and that is used to store the information about the to-be-written data.

In an embodiment, the address of the information about the to-be-written data is an address of a submission queue SQ of the SSD.

In an embodiment, the receiving unit is further configured to receive an address, in the SSD, that is sent by the storage device and that is used to store information about to-be-read data. The indication unit is further configured to store the information about the to-be-read data into the address that is in the SSD and that is used to store the information about the to-be-read data, and indicate the SSD to obtain the to-be-read data from the SSD based on the information about the to-be-read data, and write the to-be-read data into the memory of the storage device.

In an embodiment, the address that is in the SSD and that is used to store the information about the to-be-read data is an address of a doorbell.

In an embodiment, the receiving unit is further configured to receive a data writing complete notification message returned by the SSD.

It should be understood that the foregoing structure of the network device is merely an example, and should not constitute a specific limitation. Units of the network device may be added, reduced, or combined based on a requirement. In addition, operations and/or functions of the units in the network device are respectively intended to implement corresponding procedures of the foregoing methods described in FIG. 3, FIG. 4, and FIG. 5. For brevity, details are not described herein again.

FIG. 7 is a schematic diagram of a structure of a computing device according to an embodiment of this application. As shown in FIG. 7, the computing device 700 includes a processor 710, a communications interface 720, and a memory 730. The processor 710, the communications interface 720, and the memory 730 are connected to each other by using an internal bus 740.

The computing device 700 may be the application server in FIG. 2. A function performed by the application server in FIG. 2 is actually performed by the processor 710 of the application server.

The processor 710 may include one or more general purpose processors, such as a central processing unit (central processing unit, CPU) or a combination of a CPU and a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof.

The bus 740 may be a peripheral component interconnect (peripheral component interconnect, PCI) bus, an extended industry standard architecture (extended industry standard architecture, EISA) bus, and or the like. The bus 740 may be classified into an address bus, a data bus, a control bus, and the like. For ease of representation, only one bold line is used for representation in FIG. 7, but this does not mean that there is only one bus or only one type of bus.

The memory 730 may include a volatile memory (volatile memory), for example, a random access memory (random access memory, RAM). The memory 730 may alternatively include a non-volatile memory (non-volatile memory), for example, a read-only memory (read-only memory, ROM), a flash memory (flash memory), a hard disk drive (hard disk drive, HDD), or a solid-state drive (solid-state drive, SSD). The memory 730 may alternatively include a combination of the foregoing types. Program code may be used to implement a functional unit shown in the network device 600, or is used to implement method steps that are in the method embodiments shown in FIG. 3, FIG. 4, and FIG. 5 and that are performed by an application server.

An embodiment of this application further provides a computer-readable storage medium, and the computer-readable storage medium stores a computer program. When the program is performed by a processor, some or all of steps of any of the methods described in the foregoing method embodiments may be implemented, and functions of any functional unit described in FIG. 6 may be implemented.

An embodiment of this application further provides a computer program product. When the computer program product is run on a computer or a processor, the computer or the processor is enabled to perform one or more steps in any one of the foregoing methods. When each component unit of the device is implemented in a form of a software functional unit and sold or used as an independent product, the component unit may be stored in the computer readable storage medium.

In the foregoing embodiments, the descriptions in each embodiment have respective focuses. For a part that is not described in detail in an embodiment, refer to related descriptions in other embodiments.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes: Any medium that can store program code, such as a USB flash drive, a removable hard disk, a read-only memory (Read-Only Memory, ROM), a random access memory (Random Access Memory, RAM), a magnetic disk, or an optical disc.

In conclusion, the foregoing embodiments are merely intended for describing the technical solutions of this application, but not for limiting this application. Although this application is described in detail with reference to the foregoing embodiments, a person of ordinary skill in the art should understand that modifications to the technical solutions recorded in the foregoing embodiments or equivalent replacements to some technical features thereof may still be made, without departing from the scope of the technical solutions of embodiments of this application.

## Claims

1. A data access method, wherein the method comprises:
writing, by a network device, to-be-written data received from a host into memory of a storage device, wherein the host is connected to the storage device by using the network device; and
indicating, by the network device, a solid-state drive SSD into which the to-be-written data in the storage device is to be written to write the to-be-written data in the memory into the SSD.

2. The method according to claim 1, wherein the indicating, by the network device of the host, an SSD into which the to-be-written data in the storage device is to be written to write the to-be-written data in the memory into the SSD comprises:
storing, by the network device, information about the to-be-written data into the SSD, indicating the SSD to obtain the to-be-written data from the memory based on the information about the to-be-written data, and writing the to-be-written data into the SSD.

3. The method according to claim 2, wherein the method further comprises:
receiving, by the network device, an address, in the SSD, that is sent by the storage device and that is used to store the information about the to-be-written data; and
the storing, by the network device, information about the to-be-written data into the SSD comprises:
storing, by the network device, the information about the to-be-written data into the address that is in the SSD and that is used to store the information about the to-be-written data.

4. The method according to claim 3, wherein the address of the information about the to-be-written data is an address of a submission queue SQ of the SSD.

5. The method according to any one of claims 1 to 4, wherein the method further comprises:
receiving, by the network device, an address, in the SSD, that is sent by the storage device and that is used to store information about to-be-read data; and
storing, by the network device, into the address that is in the SSD and that is used to store the information about the to-be-read data, the information that is about the to-be-read data and that is sent by the host, indicating the SSD to obtain the to-be-read data from the SSD based on the information about the to-be-read data, and writing the to-be-read data into the memory of the storage device.

6. The method according to claim 5, wherein the address that is in the SSD and that is used to store the information about the to-be-read data is an address of a doorbell.

7. The method according to any one of claims 1 to 6, wherein after the indicating, by the network device, an SSD into which the to-be-written data in the storage device is to be written to write the to-be-written data in the memory into the SSD, the method further comprises:
receiving, by the network device, a data writing complete notification message returned by the SSD.

8. A network device, comprising:
a receiving unit, configured to receive to-be-written data from a host;
a writing unit, configured to write the to-be-written data into memory of a storage device; and
an indication unit, configured to indicate a solid-state drive SSD into which the to-be-written data in the storage device is to be written to write the to-be-written data in the memory into the SSD.

9. The network device according to claim 8, wherein the indication unit is specifically configured to:
store information about the to-be-written data into the SSD, indicate the SSD to obtain the to-be-written data from the memory based on the information about the to-be-written data, and write the to-be-written data into the SSD.

10. The network device according to claim 9, wherein
the receiving unit is further configured to receive an address, in the SSD, that is sent by the storage device and that is used to store the information about the to-be-written data; and
the indication unit is further configured to store the information about the to-be-written data into the address that is in the SSD and that is used to store the information about the to-be-written data.

11. The network device according to claim 10, wherein the address of the information about the to-be-written data is an address of a submission queue SQ of the SSD.

12. The network device according to any one of claims 8 to 11, wherein
the receiving unit is further configured to receive an address, in the SSD, that is sent by the storage device and that is used to store information about to-be-read data; and
the indication unit is further configured to store the information about the to-be-read data into the address that is in the SSD and that is used to store the information about the to-be-read data, indicate the SSD to obtain the to-be-read data from the SSD based on the information about the to-be-read data, and write the to-be-read data into the memory of the storage device.

13. The network device according to claim 12, wherein the address that is in the SSD and that is used to store the information about the to-be-read data is an address of a doorbell.

14. The network device according to any one of claims 8 to 13, wherein
the receiving unit is further configured to receive a data writing complete notification message returned by the SSD.

15. A computing device, wherein the computing device comprises a memory and a processor, and the processor executes computer instructions stored in the memory, so that the computing device is enabled to perform the method according to any one of claims 1 to 7.

16. A computer-readable storage medium, wherein the computer-readable storage medium stores a computer program, and when the computer program is executed by a processor, a function of the method according to any one of claims 1 to 7 is implemented.
